# EUROPÄISCHE PATENTANMELDUNG

(11) **EP 4 832 317 A1**
(43) Veröffentlichungstag der Anmeldung: **28.10.2026**
(21) Anmeldenummer: 26157185.5
(22) Anmeldetag: 09.02.2026
(51) Int. Cl.: H02K 24/00, G01D 5/20

(54) **RESOLVER**

(30) Priorität: 24.04.2025 DE 102025001367
(71) Anmelder: Dr. Johannes Heidenhain GmbH, 83301 Traunreut (DE)
(72) Erfinder: SCHRÖDER, Thomas, 85635 Höhenkirchen-Seigertsbrunn (DE); PIELOK, Gerhard, 81241 München (DE); WANGLER, Nicolai, 83236 Übersee (DE)

(57) **Zusammenfassung**

Die Erfindung betrifft einen Resolver umfassend eine erste Baueinheit (1) und eine zweite Baueinheit (2), wobei die Baueinheiten (1, 2) relativ zueinander um eine Achse (A) drehbar sind. Die erste Baueinheit (1) umfasst eine erste Wicklung (1.1), die in einem ersten Gehäuse (1.2) angeordnet ist. Das erste Gehäuse (1.2) weist eine erste Gehäuseschale (1.21) und eine zweite Gehäuseschale (1.22) auf, wobei die erste Gehäuseschale (1.21) erste Laschen (1.211) aufweist und die zweite Gehäuseschale (1.22) zweite Laschen (1.221). Die Laschen (1.211, 1.221) verlaufen mit axialer Richtungskomponente und sind in Umfangsrichtung zueinander versetzt ineinander greifend zusammengefügt. Die erste Gehäuseschale (1.21) weist einen ersten Steg (1.213) auf, der radial versetzt zu den ersten Laschen (1.211) der ersten Gehäuseschale (1.21) angeordnet ist und mit paralleler Richtungskomponente zu den ersten Laschen der ersten Gehäuseschale (1.21) verläuft. (Figur 1)

## Beschreibung

### GEBIET DER TECHNIK

Die Erfindung betrifft einen Resolver, insbesondere einen bürstenlosen Resolver, gemäß dem Anspruch 1.

Als Resolver bezeichnet man in der Elektrotechnik einen elektromagnetischen Messumformer zur Wandlung der Winkellage eines Rotors in eine elektrische Größe, bzw. in elektrische Signale. Diese Signale dienen letztlich zur Bestimmung der relativen Winkellage zwischen zwei zueinander drehbaren Baueinheiten, beispielsweise zwei zueinander drehbarer Maschinenteile. In der vorliegenden Anmeldung umfasst der Begriff Resolver auch Messumformer, die mit Synchro oder Drehmelder bezeichnet werden.

Häufig sind bei einem Resolver in einem Gehäuse versetzte Statorwicklungen angeordnet, die einen innerhalb des Gehäuses befindlichen Rotor mit Rotorwicklungen umschließen. In diesem Fall sind sowohl die Statorwicklungen als auch die Rotorwicklungen an jeweils einem Blechpaket angeordnet, welches zur Führung des magnetischen Flusses dient. Die Blechpakete bestehen aus einer Vielzahl von Einzelblechen, die in der Regel aus einem weichmagnetischen Material bestehen, damit deren elektromagnetische Wirkung gesteigert wird.

Bei bürstenlosen Resolvern wird eine Versorgungsspannung durch eine stehende Wicklung eines Transformators auf eine rotierende Wicklung des Transformators berührungslos übertragen. Üblicherweise sind die stator- und rotorseitigen Wicklungen in jeweils einem Gehäuse des Transformators angeordnet.

Derartige Resolver werden meist in großen Stückzahlen hergestellt, so dass hier eine einfache, möglichst automatisierte Fertigung geboten ist.

### STAND DER TECHNIK

In der Offenlegungsschrift DE 10 2009 020 327 A1 ist ein bürstenloser Resolver offenbart, bei dem ein Gehäuse für die Wicklungen des Transformators aus zwei Gehäuseschalen mit ineinander greifenden Laschen besteht.

### ZUSAMMENFASSUNG DER ERFINDUNG

Der Erfindung liegt die Aufgabe zugrunde, einen Resolver zu schaffen, welcher eine überaus hohe Messgenauigkeit aufweist und weiterhin mit minimalem Aufwand herstellbar ist.

Diese Aufgabe wird erfindungsgemäß durch die Merkmale des Anspruchs 1 gelöst.

Demgemäß umfasst der Resolver eine erste Baueinheit und eine zweite Baueinheit, wobei die Baueinheiten relativ zueinander um eine Achse drehbar sind. Der Resolver dient zur Bestimmung der relativen Winkellage zwischen den beiden Baueinheiten. Die erste Baueinheit umfasst eine erste Wicklung, die in einem ersten Gehäuse angeordnet ist, und die zweite Baueinheit eine zweite Wicklung, die in einem zweiten Gehäuse angeordnet ist. Das erste Gehäuse weist eine erste Gehäuseschale und eine zweite Gehäuseschale auf, wobei die erste Gehäuseschale erste Laschen und die zweite Gehäuseschale zweite Laschen aufweist. Die ersten Laschen und / oder die zweiten Laschen verlaufen mit axialer Richtungskomponente, also mit einer Richtungskomponente parallel zur Achse. Ferner sind die ersten Laschen und die zweiten Laschen in Umfangsrichtung zueinander versetzt mit axialer Überdeckung ineinander greifend zusammengefügt. Die erste Gehäuseschale weist einen ersten Steg auf, der radial versetzt zu den ersten Laschen angeordnet ist und mit paralleler Richtungskomponente zu den ersten Laschen der ersten Gehäuseschale und / oder zu den zweiten Laschen der zweiten Gehäuseschale verläuft.

Im Folgenden beziehen sich die Begriffe radial und axial auf die Achse, um welche die Baueinheiten relativ zueinander drehbar sind. Somit bedeutet "axial" parallel zur Achse und "radial" orthogonal zur Achse.

Mit Vorteil weist die zweite Gehäuseschale einen zweiten Steg auf, der radial versetzt zu den zweiten Laschen der zweiten Gehäuseschale angeordnet ist und mit paralleler Richtungskomponente zu den zweiten Laschen der zweiten Gehäuseschale und / oder zu den ersten Laschen der ersten Gehäuseschale verläuft.

In weiterer Ausgestaltung der Erfindung ist die erste Gehäuseschale oder die zweite Gehäuseschale oder sind beide Gehäuseschalen aus einem Blech hergestellt, dessen Material Nickel und Eisen umfasst.

Vorteilhafterweise weist das Blech eine Dicke von weniger als 0,75 mm auf, insbesondere weniger als 0,6 mm, insbesondere weniger als 0,5 mm.

Mit Vorteil ist die erste Gehäuseschale so ausgestaltet, dass ein stirnseitiges Ende einer ersten Lasche jeweils einem zweiten Abschnitt der zweiten Gehäuseschale gegenüber liegt. Weiterhin kann ein stirnseitiges Ende der zweiten Laschen jeweils einem ersten Abschnitt der ersten Gehäuseschale gegenüber liegen.

In weiterer Ausgestaltung der Erfindung ist der zweite Abschnitt der zweiten Gehäuseschale mit radialem Überstand oder bündig relativ zu einer der ersten Laschen der ersten Gehäuseschale angeordnet. Analog kann der erste Abschnitt der ersten Gehäuseschale mit radialem Überstand oder bündig relativ zu einer der zweiten Laschen der zweiten Gehäuseschale angeordnet sein.

Vorteilhafterweise erstreckt sich der erste Steg oder der zweite Steg oder erstrecken sich beide Stege in Umfangsrichtung über einen Winkel von mindestens 90°, insbesondere mindestens 120°, insbesondere mindestens 270°. Mit Vorteil erstrecken sich der erste Steg oder der zweite Steg oder beide in Umfangsrichtung über einen Winkel von 360°, also über den gesamten Umfang.

In weiterer Ausgestaltung der Erfindung verläuft der erste Steg in der gleichen Richtung wie der zweite Steg. Das heißt, dass beispielsweise die freien Enden der Stege in die gleiche Richtung weisen.

Mit Vorteil weisen der erste Steg und der zweite Steg jeweils einen gleich großen Abstand zur Achse auf. Die Stege liegen insbesondere auf der Mantelfläche eines virtuellen Kreiszylinders, dessen Symmetrieachse mit der Achse, um welche die Baueinheiten relativ zueinander drehbar sind, zusammenfällt.

Vorteilhafterweise sind der erste Steg oder der zweite Steg oder beide mit radialem Abstand der zweiten Wicklung und / oder dem zweiten Gehäuse gegenüber liegend angeordnet. Einer der Stege oder beide Stege sind also gegenüberliegend zur zweiten Wicklung bzw. zum zweiten Gehäuse angeordnet, so dass zwischen dem Steg und der zweiten Wicklung ein Spalt in radialer Richtung vorliegt, bzw. zwischen dem Steg und dem zweiten Gehäuse.

In weiterer Ausgestaltung der Erfindung ist das erste Gehäuse radial außerhalb des zweiten Gehäuses angeordnet bzw. umschließt das erste Gehäuse das zweite Gehäuse.

Durch die erfindungsgemäße Ausgestaltung des Resolvers kann eine hohe Messgenauigkeit erreicht werden und gleichzeitig der Materialbedarf reduziert werden.

In weiterer Ausgestaltung der Erfindung ist der Resolver als bürstenloser Resolver ausgebildet und die Wicklung ist einem Transformator zugeordnet.

Die Gehäuseschalen können vorteilhaft einstückig aus einem Blech geformt sein. Weiterhin können die Gehäuseschalen durch einen Stanzprozess und einen Biegeprozess hergestellt sein.

Besonders vorteilhaft ist es, wenn die Gehäuseschalen bezüglich der Achse rotationssymmetrisch ausgestaltet sind.

Vorteilhafte Ausbildungen der Erfindung entnimmt man den abhängigen Ansprüchen.

Weitere Einzelheiten und Vorteile des erfindungsgemäßen Resolvers ergeben sich aus der nachfolgenden Beschreibung eines Ausführungsbeispiels anhand der beiliegenden Figuren.

### KURZE BESCHREIBUNG DER ZEICHNUNGEN

Es zeigen die
- Figur 1: eine Längsschnittdarstellung eines Resolvers,
- Figur 2: eine Draufsicht auf eine erste Gehäuseschale,
- Figur 3: eine perspektivische Ansicht der ersten Gehäuseschale,
- Figur 4: eine perspektivische Ansicht einer zweiten Gehäuseschale,
- Figur 5: eine perspektivische Ansicht eines ersten Gehäuses,
- Figur 6: eine vergrößerte Schnittdarstellung durch das erste Gehäuse.

### BESCHREIBUNG DER AUSFÜHRUNGSFORMEN

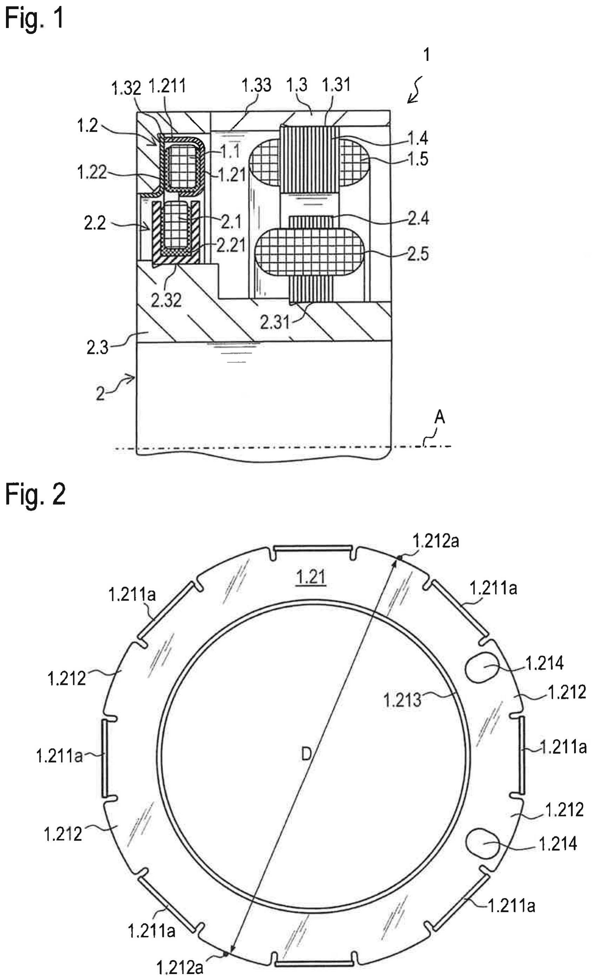

Gemäß der Figur 1 umfasst der Resolver zwei relativ um eine Achse A drehbare Baueinheiten 1, 2, beispielsweise einen Stator als erste Baueinheit 1 und einen Rotor als zweite Baueinheit 2. Die erste Baueinheit 1 weist ein Resolvergehäuse 1.3 auf mit einem Bereich der als Halterung 1.31 für ein Blechpaket 1.4 dient. An diesem Blechpaket 1.4 sind Empfängerwicklungen 1.5 angeordnet. Im vorliegenden Ausführungsbeispiel sind zwei um 90° versetzte Empfängerwicklungen 1.5 vorgesehen.

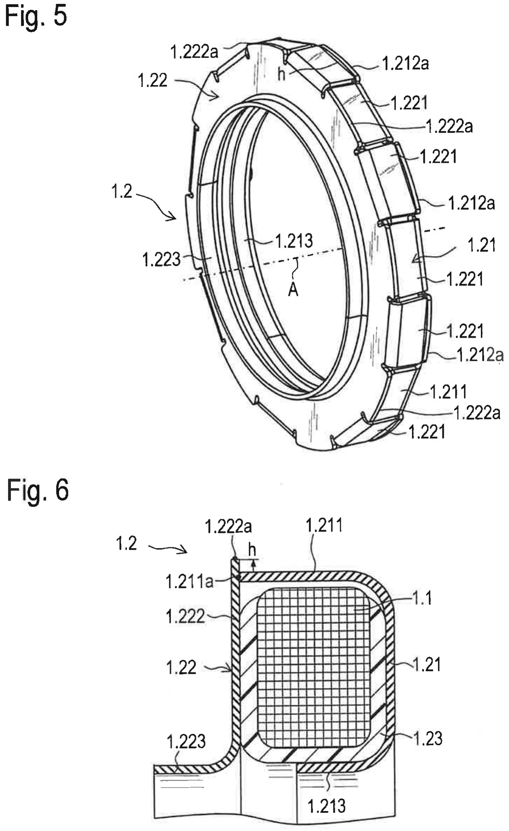

Ferner weist die erste Baueinheit einen Haltebereich 1.32 auf zur Aufnahme eines Transformatorteils, bestehend aus Wicklungen 1.1 und einem die Wicklungen 1.1 umgebendes erstes Gehäuse 1.2. Das erste Gehäuse 1.2 umfasst eine erste Gehäuseschale 1.21 und eine zweite Gehäuseschale 1.22. Zwischen den Wicklungen 1.1 und den Gehäuseschalen 1.21, 1.22 ist ein dielektrischer Trägerkörper 1.23 angeordnet (siehe Figur 6). Die Gehäuseschalen 1.21, 1.22 weisen jeweils Laschen 1.211, 1.221 auf, welche mit axialer Richtungskomponente orientiert sind und in Umfangsrichtung zueinander versetzt mit axialer Überdeckung ineinander greifend zusammengefügt sind (siehe auch die Figur 5).

Die zweite Baueinheit 2 weist gemäß der Figur 1 eine Welle 2.3 auf, an der ein Haltebereich 2.32 hergestellt ist, der zur Aufnahme eines rotorseitigen Transformatorteils, welches Wicklungen 2.1 und ein die Wicklungen 2.1 umgebendes zweites Gehäuse 2.2 umfasst. Auch das zweite Gehäuse 2.2 umfasst einen Trägerkörper 2.21 aus dielektrischem Material, welcher die zweiten Wicklungen 2.1 aufnimmt. An einer Halterung 2.31 der Welle 2.3 ist ein Blechpaket 2.4 mit Sendewicklungen 2.5 angeordnet. Üblicherweise werden die Sendewicklungen 2.5 samt Blechpaket 2.4 nach dem Zusammenbau der zweiten Baueinheit 2 mit einer Vergussmasse vergossen. Die Vergussmasse ist der Übersichtlichkeit halber nicht in der Figur 1 dargestellt.

Im gezeigten Ausführungsbeispiel ist die Welle 2.3 als eine Hohlwelle ausgestaltet, in welcher eine Motorwelle, deren Winkellage zu bestimmen ist, drehfest fixiert werden kann.

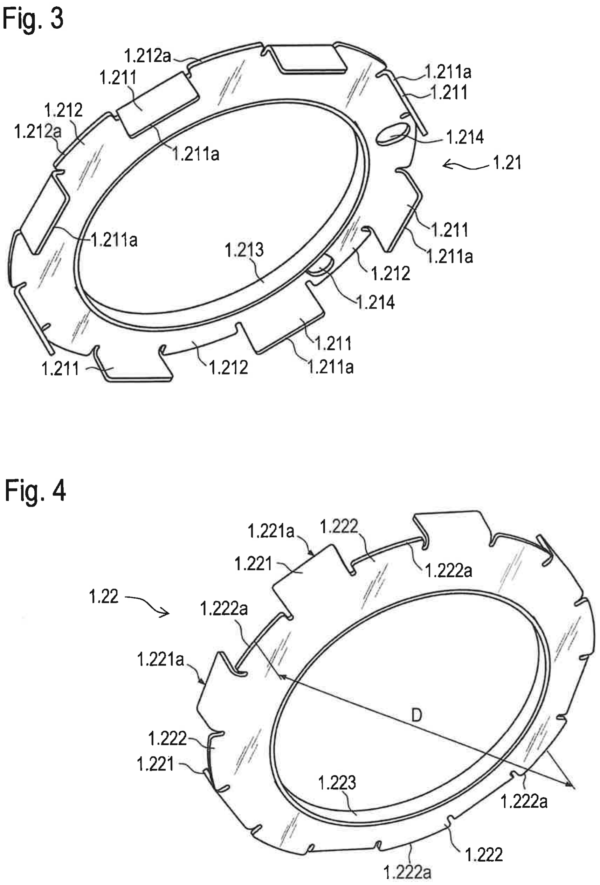

In der Figur 2 ist die erste Gehäuseschale 1.21 in einer Draufsicht dargestellt und in der Figur 3 perspektivisch. Die erste Gehäuseschale 1.21 umfasst erste Laschen 1.211 (Figur 3), erste Abschnitte 1.212 und einen ersten Steg 1.213. Die erste Gehäuseschale 1.21 wurde aus einem ebenen Blechteil hergestellt, aus welchem zunächst ein einstückiges Stanzteil herausgetrennt wurde. Dieses Stanzteil wurde dann durch einen Biegeprozess so geformt, dass die ersten Laschen 1.211 und der erste Steg 1.213 vorliegen, während die ersten Abschnitte 1.212 nicht verformt wurden. Die ersten Laschen 1.211 weisen stirnseitige Enden 1.211a bzw. Flächen auf, die durch den Stanzprozess erzeugt wurden. Ebenso weisen die ersten Abschnitte 1.212 stirnseitig Enden 1.212a bzw. Flächen auf, die durch den Stanzprozess erzeugt wurden. Die stirnseitigen Enden 1.212a der ersten Abschnitte 1.212 sind zu diametral gegenüber liegenden Enden 1.212a im Abstand D angeordnet. Der erste Steg 1.213 ist radial nach innen versetzt zu den ersten Laschen 1.211 angeordnet und verläuft mit paralleler Richtungskomponente zu den ersten Laschen 1.211, hier in axialer Richtung. Zudem umfasst die erste Gehäuseschale 1.21 Löcher 1.214, die zur Durchführung von Litzen vorgesehen sind. In der Figur 3, wie auch in den anderen Figuren, sind der Übersichtlichkeit halber nicht alle Teile, beispielsweise alle Laschen, mit entsprechenden Bezugszeichen versehen.

In der Figur 4 ist die zweite Gehäuseschale 1.22 perspektivisch dargestellt. Auch die zweite Gehäuseschale 1.22 wurde durch einen Stanz-Biegeprozess hergestellt. Die zweite Gehäuseschale 1.22 umfasst zweite Laschen 1.221, zweite Abschnitte 1.222 und einen zweiten Steg 1.223. Die zweiten Laschen 1.221 weisen stirnseitige Enden 1.221a bzw. Flächen auf, die durch den Stanzprozess erzeugt wurden. Durch den Stanzprozess wurden zudem die stirnseitigen Enden 1.222a bzw. Flächen der zweiten Abschnitte 1.222 erzeugt. Die stirnseitigen Enden 1.222a der zweiten Abschnitte 1.222 sind im Abstand D diametral zu gegenüber liegenden Enden 1.222a angeordnet. Der zweite Steg 1.223 ist radial nach innen versetzt zu den zweiten Laschen 1.221 angeordnet und verläuft mit paralleler Richtungskomponente zu den zweiten Laschen 1.221, hier in axialer Richtung.

Beide Gehäuseschalen 1.21, 1.22 sind aus einem nur 0,35 mm starkem Blech hergestellt, dessen Material Nickel und Eisen umfasst oder Silizium und Eisen umfasst. Diese Materialien weisen eine vergleichsweise hohe magnetische Permeabilität auf.

Die beiden Gehäuseschalen 1.21, 1.22 werden gemäß der Figur 5 zur Bildung des ersten Gehäuses 1.2 so montiert, dass die Laschen 1.211, 1.221, welche mit axialer Richtungskomponente orientiert sind, in Umfangsrichtung zueinander versetzt ineinander greifend zusammengefügt sind.

Das so beschaffene erste Gehäuse 1.2 kann danach in das Resolvergehäuse 1.3 eingebaut werden. Dabei ist es vorteilhaft, dass die stirnseitigen Enden 1.212a, 1.222a der ersten und zweiten Abschnitte 1.212, 1.222 bedingt durch den Stanzprozess (und an diesen Stellen ohne Umformprozess) einen vergleichsweise exakten Abstand D (Figuren 2, 4) mit geringen Maßtoleranzen aufweisen. Insbesondere sind die zur ersten Gehäuseschale 1.21 gehörenden ersten Abschnitte 1.212 mit radialem Überstand h (Figuren 5, 6) relativ zu den zweiten Laschen 1.221 der zweiten Gehäuseschale 1.22 angeordnet. Gleichermaßen sind die zur zweiten Gehäuseschale 1.22 gehörenden zweiten Abschnitte 1.222 mit radialem Überstand h relativ zu den ersten Laschen 1.211 der ersten Gehäuseschale 1.21 angeordnet (h ≥ 0).

Dadurch können die stirnseitigen Enden 1.212a, 1.222a bzw. Flächen der Abschnitte 1.212, 1.222 zur Zentrierung des ersten Gehäuses 1.2 im Resolvergehäuse 1.3 verwendet werden.

Das zweite Gehäuse 2.2 ist auf der Welle 2.3 so montiert, dass die rotorseitige Wicklung 2.1 radial gegenüber der statorseitigen Wicklung 1.1 angeordnet ist (siehe Figur 1). Insbesondere ist der erste Steg 1.213 und der zweite Steg 1.223 mit radialem Abstand gegenüber liegend zur zweiten Wicklung 2.1 bzw. mit radialem Abstand gegenüber liegend zum zweiten Gehäuse 2.2 angeordnet.

Durch einen entsprechenden Resolver kann die relative Winkellage zwischen der ersten Baueinheit 1 und der zweiten Baueinheit 2 bestimmt werden. Zu diesem Zweck werden die Wicklungen 1.1 der ersten Baueinheit 1 mit einem sinusförmigen Wechselstrom beaufschlagt, was zur Folge hat, dass in die Wicklungen 2.1 der zweiten Baueinheit 2 eine Wechselspannung mit einem vorgegebenen Transformationsverhältnis induziert wird. Diese Wechselspannung wird damit auch an die Sendewicklungen 2.5 der zweiten Baueinheit 2 angelegt, so dass in den Empfängerwicklungen 1.5 der ersten Baueinheit 1, welche die Sendewicklungen 2.5 der zweiten Baueinheit 2 umschließen, entsprechende Ausgangsspannungen induziert werden. Bei der Verwendung von zwei um 90° versetzten Empfängerwicklungen 1.5 der ersten Baueinheit 1 können dann zwei um 90° phasenversetzte Spannungssignale abgegriffen werden, die von der relativen Winkellage zwischen erster Baueinheit 1 und zweiter Baueinheit 2 abhängen. Der vorliegende Resolver ist demnach als ein bürsten- oder schleifringloser Resolver ausgestaltet.

Wie insbesondere in der Figur 6 zu sehen ist, liegen die stirnseitigen Enden 1.211a der zur ersten Gehäuseschale 1.21 gehörenden ersten Laschen 1.211 jeweils einem zweiten Abschnitt 1.222 der zweiten Gehäuseschale 1.222 gegenüber. Insbesondere können jeweils die Enden 1.211a der ersten Laschen 1.211 jeweils einen zweiten Abschnitt 1.222 der zweiten Gehäuseschale 1.22 berühren. Ebenso liegen an einer anderen Stelle (in Umfangsrichtung versetzt) die stirnseitigen Enden 1.221a der zweiten Laschen 1.221 der zweiten Gehäuseschale 1.22 jeweils einem ersten Abschnitt 1.212 der ersten Gehäuseschale 1.21 gegenüber. Auch hier können die Enden 1.221a der zweiten Laschen 1.221 jeweils einen ersten Abschnitt 1.212 der ersten Gehäuseschale 1.21 berühren. Dadurch wird das an den stirnseitigen Enden 1.211a, 1.221a der Laschen 1.211, 1.221 austretende Magnetfeld unmittelbar in die gegenüber liegende zweite Gehäuseschale 1.22 geleitet. Dementsprechend werden Streuverluste durch diese Konstruktion minimiert. Die oben beschriebene Materialauswahl für die Bleche der beiden Gehäuseschale 1.21, 1.22 erlaubt die Verwendung von überaus dünnen Blechstärken, so dass der Resolver bei relativ wenig Materialaufwand mit guten elektromagnetischen Eigenschaften hergestellt werden kann.

Der erste Steg 1.213 verläuft im vorgestellten Ausführungsbeispiel in der gleichen Richtung wie der zweite Steg 1.223, das heißt, dass die Enden der 1.213, 1.223 in die gleiche Richtung weisen (in der Figur 6 nach links) bzw. dass der Verlauf der Stege1.213, 1.223 nicht antiparallel ist.

Durch die Anordnung der Stege 1.213, 1.223 relativ zum zweiten Gehäuse 2.2 bzw. zu der zweiten Wicklung 2.1 ist der Resolver vergleichsweise unempfindlich gegenüber axialen Verschiebungen zwischen der ersten Baueinheit 1 und der zweiten Baueinheit 2. Denn die sich in axialer Richtung erstreckenden Stege 1.213, 1.223 bewirken, dass die Stege 1.213, 1.223 über eine vergleichsweise große axiale Verschiebung hinweg dem zweiten Gehäuse 2.2 bzw. der zweiten Wicklung 2.1 gegenüber liegen. Dies hat zur Folge, dass das Transformationsverhältnis über eine große axiale Verschiebung hinweg hoch bleibt. Darüber hinaus haben die Stege 1.213, 1.223 auch den Vorteil, dass durch diese die Gehäuseschalen 1.21, 1.22 trotz ihrer dünnen Wandstärken mechanisch steif bzw. stabil ausgestaltet sind.

## Patentansprüche

1. Resolver umfassend eine erste Baueinheit (1) und eine zweite Baueinheit (2), wobei die Baueinheiten (1, 2) relativ zueinander um eine Achse (A) drehbar sind und der Resolver zur Bestimmung der relativen Winkellage zwischen den beiden Baueinheiten (1, 2) geeignet ist, wobei
¬ die erste Baueinheit (1) eine erste Wicklung (1.1), die in einem ersten Gehäuse (1.2) angeordnet ist, umfasst und
¬ die zweite Baueinheit (2) eine zweite Wicklung (2.1), die in einem zweiten Gehäuse (2.2) angeordnet ist, umfasst, wobei
¬ das erste Gehäuse (1.2) eine erste Gehäuseschale (1.21) und eine zweite Gehäuseschale (1.22) aufweist, wobei
- die erste Gehäuseschale (1.21) erste Laschen (1.211) aufweist und
- die zweite Gehäuseschale (1.22) zweite Laschen (1.221) aufweist, wobei
die Laschen (1.211, 1.221) mit axialer Richtungskomponente verlaufen und in Umfangsrichtung zueinander versetzt ineinander greifend zusammengefügt sind, **dadurch gekennzeichnet, dass** die erste Gehäuseschale (1.21) einen ersten Steg (1.213) aufweist, der radial versetzt zu den ersten Laschen (1.211) der ersten Gehäuseschale (1.21) angeordnet ist und mit paralleler Richtungskomponente zu den ersten Laschen (1.211) der ersten Gehäuseschale (1.21) verläuft.

2. Resolver gemäß dem Anspruch 1, wobei die zweite Gehäuseschale (1.22) einen zweiten Steg (1.223) aufweist, der radial versetzt zu den zweiten Laschen (1.221) der zweiten Gehäuseschale (1.22) angeordnet ist und mit paralleler Richtungskomponente zu den zweiten Laschen (1.221) der zweiten Gehäuseschale (1.22) verläuft.

3. Resolver gemäß dem Anspruch 1 oder 2, wobei die erste Gehäuseschale (1.21) und / oder die zweite Gehäuseschale (1.22) aus einem Blech hergestellt ist, dessen Material Nickel und Eisen umfasst.

4. Resolver gemäß einem der vorhergehenden Ansprüche, wobei die erste Gehäuseschale (1.21) und / oder die zweite Gehäuseschale (1.22) aus einem Blech hergestellt ist, dessen Material Silizium und Eisen umfasst.

5. Resolver gemäß einem der vorhergehenden Ansprüche, wobei die erste Gehäuseschale (1.21) und / oder die zweite Gehäuseschale (1.22) aus einem Blech hergestellt ist, das eine Dicke von weniger als 0,75 mm aufweist.

6. Resolver gemäß einem der vorhergehenden Ansprüche, wobei die erste Gehäuseschale (1.21) so ausgestaltet ist, dass ein stirnseitiges Ende (1.211a) einer ersten Lasche (1.211) jeweils einem zweiten Abschnitt (1.222) der zweiten Gehäuseschale (1.22) gegenüber liegt.

7. Resolver gemäß einem der vorhergehenden Ansprüche, wobei die zweite Gehäuseschale (1.22) so ausgestaltet ist, dass ein stirnseitiges Ende (1.221a) einer zweiten Lasche (1.221) jeweils einem ersten Abschnitt (1.212) der ersten Gehäuseschale (1.21) gegenüber liegt.

8. Resolver gemäß einem der vorhergehenden Ansprüche, wobei der zweite Abschnitt (1.222) der zweiten Gehäuseschale (1.22) mit radialem Überstand (h) oder bündig relativ zu einer der ersten Laschen (1.211) der ersten Gehäuseschale (1.21) angeordnet ist.

9. Resolver gemäß einem der vorhergehenden Ansprüche, wobei der erste Abschnitt (1.212) der ersten Gehäuseschale (1.21) mit radialem Überstand (h) oder bündig relativ zu einer der zweiten Laschen (1.221) der zweiten Gehäuseschale (1.22) angeordnet ist.

10. Resolver gemäß einem der vorhergehenden Ansprüche, wobei sich der erste Steg (1.213) und / oder der zweite Steg (1.223) in Umfangsrichtung über einen Winkel von mindestens 90° erstreckt.

11. Resolver gemäß einem der vorhergehenden Ansprüche, wobei sich der erste Steg (1.213) und / oder der zweite Steg (1.223) in Umfangsrichtung über einen Winkel von 360° erstreckt.

12. Resolver gemäß einem der vorhergehenden Ansprüche, wobei die zweite Gehäuseschale (1.22) einen zweiten Steg (1.223) aufweist, der radial versetzt zu den zweiten Laschen (1.221) der zweiten Gehäuseschale (1.22) angeordnet ist und mit paralleler Richtungskomponente zu den Laschen (1.211, 1.221) der zweiten Gehäuseschale (1.22) verläuft, wobei der erste Steg (1.213) in der gleichen Richtung verläuft wie der zweite Steg (1.223).

13. Resolver gemäß einem der vorhergehenden Ansprüche, wobei die zweite Gehäuseschale (1.22) einen zweiten Steg (1.223) aufweist, der radial versetzt zu den zweiten Laschen (1.221) der zweiten Gehäuseschale (1.22) angeordnet ist und mit paralleler Richtungskomponente zu den Laschen (1.211, 1.221) der zweiten Gehäuseschale (1.22) verläuft, wobei der erste Steg (1.213) und der zweite Steg (1.223) jeweils einen gleich großen Abstand zur Achse (A) aufweisen.

14. Resolver gemäß einem der vorhergehenden Ansprüche, wobei der erste Steg (1.213) und / oder der zweite Steg (1.223) mit radialem Abstand der zweiten Wicklung (2.1) und / oder dem zweiten Gehäuse (2.2) gegenüber liegend angeordnet ist.

15. Resolver gemäß einem der vorhergehenden Ansprüche, wobei das erste Gehäuse (1.2) radial außerhalb des zweiten Gehäuses (2.2) angeordnet ist.
